# EUROPEAN PATENT APPLICATION

(11) **EP 4 534 372 A1**
(43) Date of publication of application: **09.04.2025**
(21) Application number: 23731354.9
(22) Date of filing: 17.05.2023
(51) Int. Cl.: B60W 30/18, B60W 10/188, B60W 30/04, F02D 41/10, B60W 50/00, B60W 10/06

(54) **CONTROL SYSTEM AND CONTROL METHOD**

(30) Priority: 02.06.2022 JP 2022090532
(71) Applicant: Robert Bosch GmbH, 70442 Stuttgart (DE)
(72) Inventor: KANEKO, Shoichiro, Yokohama-shi, Kanagawa 224-8501 (JP); OIKAWA, Yuya, Yokohama-shi, Kanagawa 224-8501 (JP)
(74) Representative: Isarpatent
(86) International application number: PCT/IB2023/055060
(87) International publication number: WO 2023/233229

(57) **Abstract**

The invention obtains a control system and a control method capable of improving safety without impairing natural feeling obtained by a motorcycle rider from a throttle operation.

In regard to the control system and the control method according to the invention, the control system includes a first controller controlling torque TA of a drive source of a motorcycle and a second controller communicating with the first controller. Prior to main control in which torque suppression control is executed at the time of detecting spinning of a drive wheel or a wheelie, pre-control is executed in which the second controller determines and sends reference torque TS of the drive source to the first controller and the first controller executes the torque suppression control to suppress torque on the basis of the reference torque TS received from the second controller. In the torque suppression control in the pre-control, the torque TA does not show a reduction tendency.

## Description

### Technical Field

This disclosure relates to a control system and a control method capable of improving safety without impairing natural feeling obtained by a motorcycle rider from a throttle operation.

### Background Art

Conventionally, the following method has been proposed. In the method, target torque at the time of controlling engine torque is determined in order to mitigate spinning of a drive wheel or a wheelie of a motorcycle caused by the excess engine torque. For example, the following technique is disclosed in PTL 1. Control is intervened to reduce the engine torque in comparison with a case without the control not only when occurrence of spinning of a rear wheel as the drive wheel or the wheelie is determined, but also when an increase amount of a driver's requested torque per unit time becomes a threshold value or higher.

### Citation List

### Patent Literature

PTL 1: JP2019-019784A

### Summary of Invention

### Technical Problem

Hereinafter, traction control that intervenes when spinning of the drive wheel or the wheelie is detected will be referred to as main control. Meanwhile, pre-control is the traction control that grasps a sign of the occurrence of spinning of the drive wheel or the wheelie from behavior of a signal associated with torque of a drive source and intervenes before spinning of the drive wheel or the wheelie is detected. By the way, there is a case where the torque of the drive source is excessively suppressed and rapidly reduced at initiation of the pre-control. In particular, such a phenomenon is likely to occur when a controller that controls the torque of the drive source differs from a controller that executes processing to determine a control command to the drive source in the pre-control due to delayed communication between the controllers. Such a phenomenon becomes a cause of impairing natural feeling obtained by the rider from a throttle operation. Thus, it has been problematic to answer a request for improved vehicle stability while promoting intervention by the pre-control.

The invention has been made with the above-described problem as the background and therefore obtains a control system and a control method capable of improving safety without impairing natural feeling obtained by a motorcycle rider from a throttle operation.

### Solution to Problem

A control system according to the invention is a control system executing traction control to mitigate spinning of a drive wheel or a wheelie that occurs to a motorcycle, and includes a first controller controlling torque of a drive source of the motorcycle and a second controller communicating with the first controller. When spinning of the drive wheel or the wheelie is detected, main control is executed in which the second controller determines and sends reference torque of the drive source to the first controller and the first controller executes torque suppression control to suppress the torque on the basis of the reference torque received from the second controller. Prior to the main control, pre-control is executed in which the second controller determines and sends the reference torque of the drive source to the first controller and the first controller executes the torque suppression control to suppress the torque on the basis of the reference torque received from the second controller. In the torque suppression control in the pre-control, the torque does not show a reduction tendency.

A control method according to the invention is a control method for a control system executing traction control to mitigate spinning of a drive wheel or a wheelie that occurs to a motorcycle, and the control system includes a first controller controlling torque of a drive source of the motorcycle and a second controller communicating with the first controller. The control method includes: when spinning of the drive wheel or the wheelie is detected, executing main control in which the second controller determines and sends reference torque of the drive source to the first controller and the first controller executes torque suppression control to suppress the torque on the basis of the reference torque received from the second controller; and, prior to the main control, executing pre-control in which the second controller determines and sends the reference torque of the drive source to the first controller and the first controller executes the torque suppression control to suppress the torque on the basis of the reference torque received from the second controller. In the torque suppression control in the pre-control, the torque does not show a reduction tendency.

### Advantageous Effects of Invention

In regard to the control system and the control method according to the invention, the control system includes the first controller controlling the torque of the drive source of the motorcycle and the second controller communicating with the first controller. When spinning of the drive wheel or the wheelie is detected, the main control is executed in which the second controller determines and sends the reference torque of the drive source to the first controller and the first controller executes the torque suppression control to suppress the torque on the basis of the reference torque received from the second controller. Prior to the main control, the pre-control is executed in which the second controller determines and sends the reference torque of the drive source to the first controller and the first controller executes the torque suppression control to suppress the torque on the basis of the reference torque received from the second controller. In the torque suppression control in the pre-control, the torque does not show the reduction tendency. In this way, occurrence of such a phenomenon is suppressed that the torque of the drive source is excessively suppressed and rapidly reduced at initiation of the torque suppression control in the pre-control. Therefore, safety can be improved without impairing natural feeling obtained by a motorcycle rider from a throttle operation.

### Brief Description of Drawings

Fig. 1 is a schematic view illustrating an outline configuration of a motorcycle according to an embodiment of the invention.
Fig. 2 is a block diagram illustrating exemplary functional configurations of a first controller and a second controller in a control system according to the embodiment of the invention.
Fig. 3 is a flowchart illustrating an exemplary processing procedure for initiation and termination of pre-control that is executed by the control system according to the embodiment of the invention.
Fig. 4 is a flowchart illustrating an exemplary processing procedure during the pre-control that is executed by the control system according to the embodiment of the invention.
Fig. 5 is a graph illustrating exemplary changes in various state amounts at the time when pre-control according to a comparative example is executed.
Fig. 6 is a graph illustrating exemplary changes in the various state amounts at the time when the pre-control according to the embodiment of the invention is executed. Description of Embodiments

A description will hereinafter be made on a control system and a control method according to the invention with reference to the drawings.

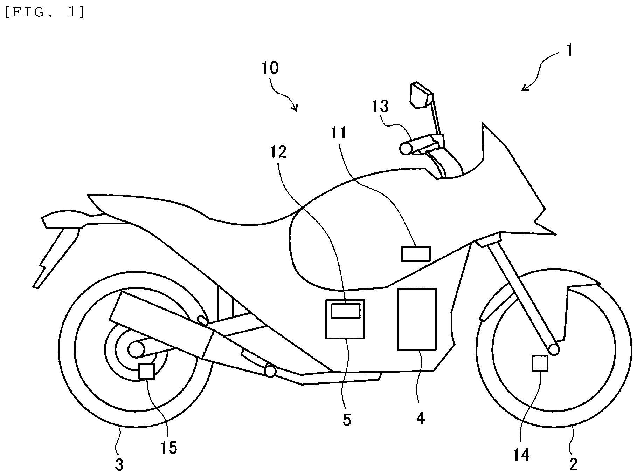

The following description will be made on a control system used for a two-wheeled motorcycle (see a motorcycle 1 in Fig. 1). However, a vehicle as a control target of the control system according to the invention may be a motorcycle other than the two-wheeled motorcycle. The motorcycles include a vehicle having an engine as a power source, a vehicle having an electric motor as the power source, and the like. Examples of the motorcycles are a motorbike, a scooter, and an electric scooter.

A configuration, operation, and the like, which will be described below, merely constitute one example. The control system and the control method according to the invention are not limited to a case with such a configuration, such operation, and the like.

The same or similar description will appropriately be simplified or will not be made below. In the drawings, the same or similar members or portions will not be denoted by a reference sign or will be denoted by the same reference sign. A detailed structure will appropriately be illustrated in a simplified manner or will not be illustrated.

### <Configuration of Motorcycle>

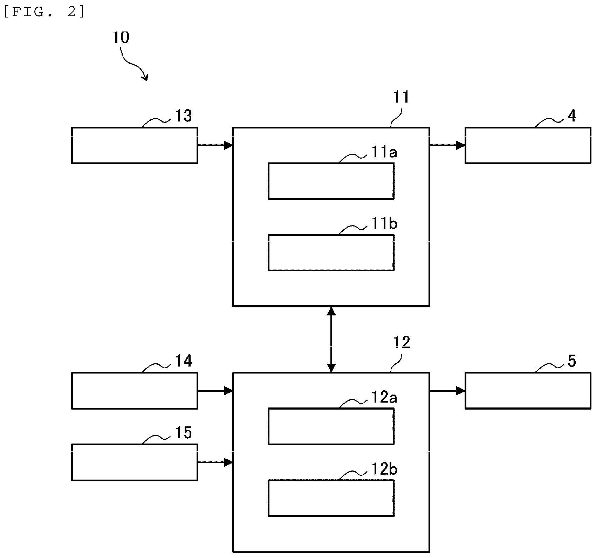

A description will be made on a configuration of the motorcycle 1 according to an embodiment of the invention with reference to Fig. 1 and Fig. 2.

Fig. 1 is a schematic view illustrating an outline configuration of the motorcycle 1. As illustrated in Fig. 1, the motorcycle 1 includes a front wheel 2, a rear wheel 3, an engine 4, and a hydraulic pressure control unit 5. The engine 4 corresponds to an example of a drive source of the motorcycle 1. However, the drive source of the motorcycle 1 may be the electric motor.

The engine 4 can output power for driving the rear wheel 3 as a drive wheel. For example, the engine 4 is provided with: one or plural cylinders, each of which is formed with a combustion chamber therein; a fuel injector that injects fuel into the combustion chamber; and an ignition plug. When the fuel is injected from the fuel injector, air-fuel mixture containing air and the fuel is produced in the combustion chamber, and the air-fuel mixture is then ignited by the ignition plug and burned. Consequently, a piston provided in the cylinder reciprocates to cause a crankshaft to rotate. A throttle valve is provided to an intake pipe of the engine 4, and an intake air amount to the combustion chamber varies according to a throttle opening amount as an opening amount of the throttle valve.

The hydraulic pressure control unit 5 is a unit that has a function to control a braking force generated on the wheel. For example, the hydraulic pressure control unit 5 includes components (for example, a control valve and a pump) that are provided on an oil channel connecting a master cylinder and a wheel cylinder and control a brake hydraulic pressure in the wheel cylinder. By controlling operation of the components of the hydraulic pressure control unit 5, the braking force generated on the wheel is controlled. The hydraulic pressure control unit 5 may control the braking force generated on each of the front wheel 2 and the rear wheel 3 or may only control the braking force generated on one of the front wheel 2 and the rear wheel 3.

As illustrated in Fig. 1, the motorcycle 1 further includes a control system 10. The control system 10 is a system that controls behavior of the motorcycle 1. The control system 10 includes a first controller 11, a second controller 12, an accelerator operation unit 13, a front-wheel rotational frequency sensor 14, and a rear-wheel rotational frequency sensor 15.

The first controller 11 controls torque of the engine 4 by controlling operation of the engine 4. The second controller 12 controls the braking force generated on the wheel by controlling operation of the hydraulic pressure control unit 5. For example, each of the first controller 11 and the second controller 12 is partially or entirely constructed of a microcomputer, a microprocessor unit, or the like. Alternatively, each of the first controller 11 and the second controller 12 may partially or entirely be one whose firmware and the like can be updated, or may be a program module or the like that is executed by a command from a CPU or the like, for example.

The second controller 12 corresponds to an example of a different controller from the first controller 11 that controls the torque of the engine 4. That is, the second controller 12 may be a controller other than the controller for the hydraulic pressure control unit 5. However, in the present specification, a description will mainly be made on an example in which the second controller 12 is the controller for the hydraulic pressure control unit 5.

The accelerator operation unit 13 accepts an accelerator operation by a rider of the motorcycle 1. More specifically, the accelerator operation unit 13 is an accelerator grip that is provided to a handlebar of the motorcycle 1 and is rotated by the rider.

The front-wheel rotational frequency sensor 14 is a wheel rotational frequency sensor that detects a rotational frequency of the front wheel 2 (for example, a rotational frequency of the front wheel 2 per unit time [rpm], a travel distance of the front wheel 2 per unit time [km/h], or the like), and outputs a detection result. The front-wheel rotational frequency sensor 14 may detect another physical quantity that can substantially be converted to the rotational frequency of the front wheel 2. The front-wheel rotational frequency sensor 14 is provided to the front wheel 2.

The rear-wheel rotational frequency sensor 15 is a wheel rotational frequency sensor that detects a rotational frequency of the rear wheel 3 (for example, the rotational frequency of the rear wheel 3 per unit time [rpm], a travel distance of the rear wheel 3 per unit time [km/h], or the like), and outputs a detection result. The rear-wheel rotational frequency sensor 15 may detect another physical quantity that can substantially be converted to the rotational frequency of the rear wheel 3. The rear-wheel rotational frequency sensor 15 is provided to the rear wheel 3.

Fig. 2 is a block diagram illustrating exemplary functional configurations of the first controller 11 and the second controller 12 in the control system 10.

As illustrated in Fig. 2, the first controller 11 includes a communication section 11a and a control section 11b, for example. The communication section 11a communicates with each of the devices in the motorcycle 1. For example, the communication section 11a acquires information on the accelerator operation by the rider from the accelerator operation unit 13. In addition, for example, the communication section 11a communicates with the second controller 12. The control section 11b controls the operation of the engine 4 by outputting a control command to the engine 4. The control section 11b basically controls the torque of the engine 4 to match the rider's requested torque. The rider's requested torque can be generated on the basis of various physical quantities, such as information on the accelerator operation and an engine speed, that are observed or estimated by the first controller 11.

As illustrated in Fig. 2, the second controller 12 includes a communication section 12a and a control section 12b, for example. The communication section 12a communicates with each of the devices in the motorcycle 1. For example, the communication section 12a acquires information on the rotational frequencies of the wheels from the front-wheel rotational frequency sensor 14 and the rear-wheel rotational frequency sensor 15. In addition, for example, the communication section 12a communicates with the first controller 11. The control section 12b controls the operation of the hydraulic pressure control unit 5 by outputting a control command to the hydraulic pressure control unit 5.

In the control system 10, traction control is executed when the first controller 11 and the second controller 12 execute processing cooperatively. The traction control is control to mitigate spinning of the drive wheel (more specifically, the rear wheel 3) or a wheelie that occurs to the motorcycle 1. In main control of the traction control, when spinning of the rear wheel 3 as the drive wheel or the wheelie actually occurs, the torque of the engine 4 is controlled to mitigate spinning of the rear wheel 3 or the wheelie. More specifically, in the main control, when spinning of the rear wheel 3 or the wheelie is detected, the second controller 12 determines and sends reference torque of the engine 4 to the first controller 11. Then, the first controller 11 executes torque suppression control to suppress the torque of the engine 4 on the basis of the reference torque received from the second controller 12.

Furthermore, in the control system 10, when the first controller 11 and the second controller 12 execute the processing cooperatively, pre-control is executed as the traction control prior to the main control. The pre-control is executed in a situation where spinning of the rear wheel 3 or the wheelie does not occur. The pre-control is control to avoid spinning of the rear wheel 3 or the wheelie from occurring by suppressing a rapid increase in the torque of the engine 4. In the pre-control, the torque suppression control to suppress the torque of the engine 4 is executed.

In this embodiment, by devising the pre-control, such a phenomenon is suppressed that the torque of the engine 4 is excessively suppressed and is thereby rapidly reduced in the pre-control. As a result, safety is improved without impairing natural feeling obtained by the rider of the motorcycle 1 from the throttle operation. A detailed description will hereinafter be made on the pre-control according to this embodiment.

### <Operation of Control System>

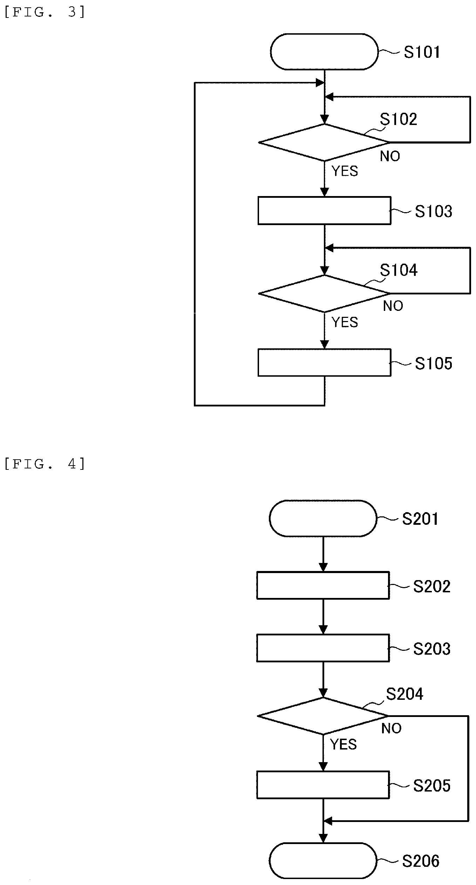

A description will be made on operation of the control system 10 according to the embodiment of the invention with reference to Fig. 3 to Fig. 6.

Fig. 3 is a flowchart illustrating an exemplary processing procedure for initiation and termination of the pre-control that is executed by the control system 10. Step S101 in Fig. 3 corresponds to initiation of a control flow illustrated in Fig. 3. A detailed description on the pre-control will be made below with reference to Fig. 4.

Processing in each step of the control flow illustrated in Fig. 3 is executed by the second controller 12, for example.

When the control flow illustrated in Fig. 3 is initiated, in step S102, the control system 10 determines whether a pre-control initiation condition is satisfied. If it is determined that the pre-control initiation condition is satisfied (step S102/YES), the processing proceeds to step S103. In step S103, the pre-control is initiated. On the other hand, if it is determined that the pre-control initiation condition is not satisfied (step S102/NO), the processing in step S102 is repeated.

For example, the pre-control initiation condition is that the requested torque by the rider of the motorcycle 1 exceeds a threshold value. In this case, more specifically, in the case where the requested torque by the rider of the motorcycle 1 exceeds the threshold value, the pre-control is initiated not on the basis of a degree of a change in the torque of the engine 4. Just as described, the pre-control initiation condition is a condition that is not based on the degree of the change in the torque of the engine 4.

After step S103, in step S104, the control system 10 determines whether a pre-control termination condition is satisfied. If it is determined that the pre-control termination condition is satisfied (step S104/YES), the processing proceeds to step S105. In step S105, the pre-control is terminated, and the processing returns to step S102. On the other hand, if it is determined that the pre-control termination condition is not satisfied (step S104/NO), the processing in step S104 is repeated.

Various conditions can be used as the pre-control termination condition. For example, as the pre-control termination condition, such a condition is used that the accelerator operation by the rider of the motorcycle 1 is canceled. Alternatively, for example, as the pre-control termination condition, such a condition is used that the requested torque by the rider of the motorcycle 1 falls below the reference torque. In the torque suppression control in the pre-control, the torque of the engine 4 is restricted to the reference torque or lower. In the case where the requested torque is lower than the reference torque, a magnitude of the torque corresponding to the requested torque has to be output from the engine 4. For this reason, such a termination condition is used. Further alternatively, for example, as the pre-control termination condition, such a condition is used that the main control has been initiated.

Fig. 4 is a flowchart illustrating an exemplary processing procedure during the pre-control that is executed by the control system 10. Step S201 in Fig. 4 corresponds to initiation of a control flow illustrated in Fig. 4. Step S206 in Fig. 4 corresponds to termination of the control flow illustrated in Fig. 4. The control flow illustrated in Fig. 4 is repeated during the pre-control.

When the control flow illustrated in Fig. 4 is initiated, in step S202, the second controller 12 determines the reference torque of the engine 4. As described above, in the torque suppression control in the pre-control, the torque of the engine 4 is restricted to the reference torque or lower. Thus, the reference torque corresponds to an upper limit value of the torque of the engine 4.

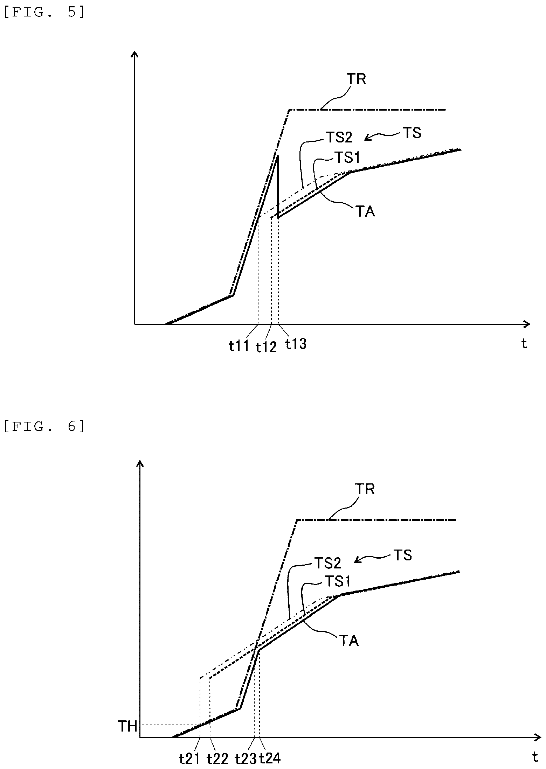

A detailed description on processing to determine the reference torque will be made below with reference to Fig. 6. Basically, the reference torque is determined on the basis of the torque of the engine 4 (more specifically, the torque of the engine 4 in a last calculation cycle) and follows a change in the torque of the engine 4. The reference torque has a higher value than the torque of the engine 4 in the last calculation cycle.

After step S202, in step S203, the second controller 12 sends the determined reference torque to the first controller 11. Then, the first controller 11 receives the reference torque sent from the second controller 12.

Here, there is a time lag between a time point at which the second controller 12 starts sending the information and a time point at which the first controller 11 finishes receiving the information from the second controller 12. Consequently, a delay occurs until the reference torque as internal information of the second controller 12 is reflected as internal information of the first controller 11. Such a delay will be referred to as a delay in communication between the first controller 11 and the second controller 12.

After step S203, in step S204, the first controller 11 determines whether the requested torque by the rider of the motorcycle 1 exceeds the reference torque.

If it is determined that the rider's requested torque exceeds the reference torque (step S204/YES), the processing proceeds to step S205. In step S205, the first controller 11 executes the torque suppression control, and the control flow illustrated in Fig. 4 is then terminated. In the torque suppression control, the torque of the engine 4 is restricted to the reference torque or lower. If it is determined that the rider's requested torque does not exceed the reference torque (step S204/NO), the control flow illustrated in Fig. 4 is terminated.

Fig. 5 is a graph illustrating exemplary changes in various state amounts at the time when pre-control according to a comparative example is executed. In Fig. 5, a horizontal axis represents time t, and the changes in the various state amounts are illustrated. The state amounts illustrated in Fig. 5 are rider's requested torque TR and torque TA and reference torque TS of the engine 4 (more specifically, reference torque TS2 as the internal information of the second controller 12 and reference torque TS1 as the internal information of the first controller 11). The torque TA is torque that is actually output from the engine 4 (that is, actual torque).

In the comparative example, a pre-control initiation condition differs from that in this embodiment. In the comparative example, the pre-control initiation condition is basically that a degree of a change in the torque TA of the engine 4 exceeds a reference degree of a change. In practice, as the pre-control initiation condition, another condition that the torque TA is higher than a reference value, or the like may be added.

In the example illustrated in Fig. 5, the torque TA of the engine 4 is increased along with an increase in the requested torque TR until a time point t11. Then, at the time point t11, the degree of the change in the torque TA exceeds the reference degree of the change, and the pre-control initiation condition is satisfied. Consequently, the pre-control is initiated. Thus, at the time point t11, the second controller 12 initiates processing to determine the reference torque TS2. In the comparative example, the second controller 12 determines the reference torque TS2 such that the reference torque TS2 is changed from the torque TA at the pre-control initiation time point t11 with a gradient of change that is not excessively steep.

Then, at a time point t12 at which the delay in the communication between the first controller 11 and the second controller 12 elapses, the first controller 11 starts receiving the reference torque TS from the second controller 12. Consequently, at the time point t12, the reference torque TS1 as the internal information of the first controller 11 starts changed in a similar manner to the change in the reference torque TS2. In the comparative example, the torque suppression control, in which the torque TA of the engine 4 is restricted to the reference torque TS or lower, is executed in association with the initiation of the pre-control. Thus, the first controller 11 initiates the torque suppression control at the time point t12.

Here, there is a time lag between a time point at which the first controller 11 outputs the control command to the engine 4 and a time point at which the control command is reflected to the torque TA. Just as described, a delay occurs until the control command output to the engine 4 by the first controller 11 is reflected to the torque TA. Accordingly, the torque TA actually starts suppressed at a time point t13 at which the delay elapses from the time point t12.

In the example illustrated in Fig. 5, in a period between the pre-control initiation time point t11 and the time point t13, at which the torque TA actually starts suppressed, there is a delay that is a sum of the delay in the communication between the first controller 11 and the second controller 12 and the delay until the control command output to the engine 4 by the first controller 11 is reflected to the torque TA. Consequently, as illustrated in Fig. 5, the torque TA that is increased from the time point t11 to the time point t13 is rapidly reduced at the time point t13. Such a phenomenon impairs the natural feeling obtained by the rider from the throttle operation.

Fig. 6 is a graph illustrating exemplary changes in the various state amounts at the time when the pre-control according to this embodiment is executed. Similar to Fig. 5, in Fig. 6, a horizontal axis represents the time t, and the changes in the various state amounts (more specifically, the requested torque TR and the torque TA and the reference torque TS of the engine 4) are illustrated. A change in the requested torque TR in the example illustrated in Fig. 6 is the same as the change in the requested torque TR in the example illustrated in Fig. 5.

In the example illustrated in Fig. 6, at a time point t21, the requested torque TR exceeds a threshold value TH, and the pre-control initiation condition is satisfied. Consequently, the pre-control is initiated. For example, the threshold value TH is set to a value that is small enough to determine whether the rider is performing the accelerator operation. Then, at the time point t21, the second controller 12 initiates the processing to determine the reference torque TS2. Just as described, in this embodiment, the pre-control is initiated not on the basis of the degree of the change in the torque TA of the engine 4. Thus, the pre-control is initiated at a time point prior to a time point at which the torque TA is rapidly increased.

In this embodiment, the second controller 12 determines the reference torque TS2 on the basis of the torque TA (more specifically, the torque TA in the last calculation cycle) such that the reference torque TS2 follows the change in the torque TA. As will be described below, in the processing to determine the reference torque TS2 in this embodiment, the above-described two types of the delays are taken into consideration.

Then, at a time point t22 at which the delay in the communication between the first controller 11 and the second controller 12 elapses from the time point t21, the first controller 11 starts receiving the reference torque TS from the second controller 12. Consequently, at the time point t22, the reference torque TS1 as the internal information of the first controller 11 starts changed in the similar manner to the change in the reference torque TS2. Thereafter, the requested torque TR is rapidly increased and, at a time point t23, exceeds the reference torque TS1. Consequently, at the time point t23, the first controller 11 determines that the requested torque TR exceeds the reference torque TS1, and initiates the torque suppression control.

Then, at a time point t24 at which the delay until the control command output to the engine 4 by the first controller 11 is reflected to the torque TA elapses from the time point t23, the torque TA actually starts suppressed. In this embodiment, the second controller 12 determines a value that is high to some extent as the reference torque TS2 in consideration of the delay as the sum of the delay in the communication between the first controller 11 and the second controller 12 and the delay until the control command output to the engine 4 by the first controller 11 is reflected to the torque TA. As a result, occurrence of such a phenomenon is suppressed that the torque TA exceeds the reference torque TS1 in a period from the torque suppression control initiation time point t23 to the time point t24 at which the torque TA actually starts suppressed.

In this way, at the time point t24, at which the torque TA actually starts suppressed, the torque TA is not reduced but continues to be increased. Just as described, in this embodiment, the torque TA does not show a reduction tendency in the torque suppression control. As a result, at the initiation of the torque suppression control, the occurrence of such a phenomenon is suppressed that the torque TA is rapidly reduced. Therefore, it is possible to ensure the natural feeling obtained by the rider of the motorcycle 1 from the throttle operation. The reduction tendency of the torque TA may include the reduction in the torque TA with ups-downs in short cycles.

The above description has been made on the processing example of the control system 10 with reference to Fig. 3 to Fig. 6. However, the processing executed by the control system 10 is not limited to the above example. For example, the above description has been made on the example in which the reference torque TS is determined on the basis of the sum of the two types of the delays that are the delay in the communication between the first controller 11 and the second controller 12 and the delay until the control command output to the engine 4 by the first controller 11 is reflected to the torque TA. The reference torque TS may be determined not on the basis of one of the two types of the delays, for example.

### <Effects of Control System>

A description will be made on effects of the control system 10 according to the embodiment of the invention.

In the control system 10, prior to the main control, the pre-control is executed in which the second controller 12 determines and sends the reference torque TS of the drive source (the engine 4 in the above example) to the first controller 11 and the first controller 11 executes the torque suppression control to suppress the torque TA on the basis of the reference torque TS received from the second controller 12. In the torque suppression control in the pre-control, the torque TA does not show the reduction tendency. As a result, at the initiation of the torque suppression control, the occurrence of such a phenomenon is suppressed that the torque TA is rapidly reduced. Therefore, the safety can be improved without impairing the natural feeling obtained by the rider of the motorcycle 1 from the throttle operation.

Preferably, in the control system 10, in the pre-control, in the case where the requested torque TR by the rider of the motorcycle 1 exceeds the reference torque TS, the torque suppression control is executed. Thus, in the case where the rider's requested torque TR is higher than the reference torque TS, the torque TA is appropriately restricted to the reference torque TS or lower.

Preferably, in the control system 10, the pre-control is initiated not on the basis of the degree of the change in the torque TA. In this way, the pre-control can be initiated at the time point prior to the time point at which the torque TA is rapidly increased. Therefore, at the initiation of the torque suppression control, it is possible to appropriately suppress the occurrence of the phenomenon that the torque TA is rapidly reduced due to the delay in the communication between the controllers, or the like.

Preferably, in the control system 10, in the case where the requested torque TR by the rider of the motorcycle 1 exceeds the threshold value TH, the pre-control is initiated. In this way, the pre-control is appropriately initiated at the time point prior to the time point at which the torque TA is rapidly increased. Therefore, at the initiation of the torque suppression control, it is possible to appropriately suppress the occurrence of the phenomenon that the torque TA is rapidly reduced due to the delay in the communication between the controllers, or the like.

Preferably, in the control system 10, in the case where the accelerator operation by the rider of the motorcycle 1 is canceled during the pre-control, the pre-control is terminated. In this way, it is possible to suppress the execution of the pre-control in a situation where the accelerator operation by the rider is canceled and the torque TA does not have to be suppressed.

Preferably, in the control system 10, in the case where the requested torque TR by the rider of the motorcycle 1 falls below the reference torque TS during the pre-control, the pre-control is terminated. In this way, it is possible to suppress the execution of the pre-control in a situation where the rider's requested torque TR falls below the reference torque TS and the torque TA does not have to be suppressed.

Preferably, in the control system 10, the reference torque TS for the pre-control is determined on the basis of the delay until the control command output to the drive source 4 by the first controller 11 is reflected to the torque TA. In this way, it is possible to appropriately suppress the torque TA from exceeding the reference torque TS, and the torque TA is increased in the period from the time point at the initiation of the torque suppression control to the time point at which the torque TA actually starts suppressed. As a result, at the initiation of the torque suppression control, the occurrence of the phenomenon that the torque TA is rapidly reduced is appropriately suppressed. Therefore, the safety is appropriately improved without impairing the natural feeling obtained by the rider of the motorcycle 1 from the throttle operation.

Preferably, in the control system 10, the reference torque TS for the pre-control is determined on the basis of the delay in the communication between the first controller 11 and the second controller 12. In this way, it is possible to appropriately suppress the torque TA from exceeding the reference torque TS, and the torque TA is increased in the period from the time point at the initiation of the torque suppression control to the time point at which the torque TA actually starts suppressed. As a result, at the initiation of the torque suppression control, the occurrence of the phenomenon that the torque TA is rapidly reduced is appropriately suppressed. Therefore, the safety is appropriately improved without impairing the natural feeling obtained by the rider of the motorcycle 1 from the throttle operation.

Preferably, in the control system 10, the second controller 12 is the controller for the hydraulic pressure control unit 5. Thus, in the motorcycle 1 in which the pre-control and the traction control are executed by the first controller 11 as the controller for the drive source (the engine 4 in the above example) and the second controller 12 as the controller for the hydraulic pressure control unit 5, the safety can be improved without impairing the natural feeling obtained by the rider from the throttle operation.

The invention is not limited to the embodiment that has been described. For example, only a part of the embodiment may be implemented.

For example, the execution condition of the torque suppression control in the pre-control may be other than the condition that the requested torque TR exceeds the reference torque TS. The pre-control initiation condition may be one of the condition that the requested torque TR by the rider of the motorcycle 1 exceeds the threshold value TH, the condition that is not based on the degree of the change in the torque TA of the engine 4, and a condition other than these, or may include plural types of the appropriate conditions. The pre-control termination condition may be one of the condition that the accelerator operation by the rider of the motorcycle 1 is canceled, the condition that the requested torque TR by the rider of the motorcycle 1 falls below the reference torque TS, the condition that the main control is initiated, and a condition other than these, or may include plural types of the appropriate conditions. As a combination of the execution condition for the torque suppression control in the pre-control, the pre-control initiation condition, and the pre-control termination condition, any of the examples that have been described as the examples of each of the conditions may appropriately be combined.

### Reference Signs List

1: Motorcycle
2: Front wheel
3: Rear wheel (drive wheel)
4: Engine (drive source)
5: Hydraulic pressure control unit
10: Control system
11: First controller
11a: Communication section
11b: Control section
12: Second controller
12a: Communication section
12b: Control section
13: Accelerator operation section
14: Front-wheel rotational frequency sensor
15: Rear-wheel rotational frequency sensor
TA: Torque
TH: Threshold value
TR: Requested torque
TS: Reference torque
TS1: Reference torque
TS2: Reference torque

## Claims

1. A control system (10) executing traction control to mitigate spinning of a drive wheel (3) or a wheelie that occurs to a motorcycle (1), the control system comprising:
a first controller (11) controlling torque (TA) of a drive source (4) of the motorcycle (1); and
a second controller (12) communicating with the first controller (11), wherein
when the spinning of the drive wheel (3) or the wheelie is detected, main control is executed in which the second controller (12) determines and sends reference torque (TS) of the drive source (4) to the first controller (11) and the first controller (11) executes torque suppression control to suppress the torque (TA) on the basis of the reference torque (TS) received from the second controller (12),
prior to the main control, pre-control is executed in which the second controller (12) determines and sends the reference torque (TS) of the drive source (4) to the first controller (11) and the first controller (11) executes the torque suppression control to suppress the torque (TA) on the basis of the reference torque (TS) received from the second controller (12), and
in the torque suppression control in the pre-control, the torque (TA) does not show a reduction tendency.

2. The control system according to claim 1, wherein
in the pre-control, in the case where requested torque (TR) by a rider of the motorcycle (1) exceeds the reference torque (TS), the torque suppression control is executed.

3. The control system according to claim 1 or 2, wherein
the pre-control is initiated not on the basis of a degree of a change in the torque (TA).

4. The control system according to claim 1 or 2, wherein
in the case where requested torque (TR) by a rider of the motorcycle (1) exceeds a threshold value (TH), the pre-control is initiated.

5. The control system according to claim 1 or 2, wherein
in the case where an accelerator operation by a rider of the motorcycle (1) is canceled during execution of the pre-control, the pre-control is terminated.

6. The control system according to claim 1 or 2, wherein
in the case where requested torque (TR) by a rider of the motorcycle (1) falls below the reference torque (TS) during execution of the pre-control, the pre-control is terminated.

7. The control system according to claim 1 or **2,** wherein
the reference torque (TS) for the pre-control is determined on the basis of a delay until a control command output to the drive source (4) by the first controller (11) is reflected to the torque (TA).

8. The control system according to claim 1 or **2,** wherein
the reference torque (TS) for the pre-control is determined on the basis of a delay in communication between the first controller (11) and the second controller (12).

9. The control system according to claim 1 or 2, wherein
the second controller (12) is a controller for a hydraulic pressure control unit (5).

10. A control method for a control system (10) executing traction control to mitigate spinning of a drive wheel (3) or a wheelie that occurs to a motorcycle (1),
the control system (10) including:
a first controller (11) controlling torque (TA) of a drive source (4) of the motorcycle (1); and
a second controller (12) communicating with the first controller (11), the control method comprising:
when the spinning of the drive wheel (3) or the wheelie is detected, executing main control in which the second controller (12) determines and sends reference torque (TS) of the drive source (4) to the first controller (11) and the first controller (11) executes torque suppression control to suppress the torque (TA) on the basis of the reference torque (TS) received from the second controller (12); and
prior to the main control, executing pre-control in which the second controller (12) determines and sends the reference torque (TS) of the drive source (4) to the first controller (11) and the first controller (11) executes the torque suppression control to suppress the torque (TA) on the basis of the reference torque (TS) received from the second controller (12), wherein
in the torque suppression control in the pre-control, the torque (TA) does not show a reduction tendency.
